# EUROPÄISCHE PATENTSCHRIFT

(11) **EP 1 525 065 B1**
(45) Veröffentlichungstag und Bekanntmachung des Hinweises auf die Patenterteilung: **02.05.2007**
(21) Anmeldenummer: 03766271.5
(22) Anmeldetag: 24.07.2003
(51) Int. Cl.: B23B 3/30, B23Q 39/04, B23Q 1/62

(54) **WERKZEUGMASCHINE MIT ZWEI WERKSTÜCKSPINDELN**
MACHINE TOOL WITH TWO WORKPIECE SPINDLES
MACHINE-OUTIL DOTEE DE DEUX BROCHES PORTE-PIECES

(30) Priorität: 30.07.2002 DE 10235873
(43) Veröffentlichungstag der Anmeldung: 27.04.2005
(73) Patentinhaber: Ex-Cell-O GmbH, 73054 Eislingen (DE)
(72) Erfinder: FEINAUER, Achim, 73033 Göppingen (DE); KREISSIG, Bernd, 73054 Eislingen (DE); STANIK, Markus, 73110 Hattenohfen (DE); WIDMANN, Reiner, 89558 Böhmenkirch-Treffelhausen (DE)
(74) Vertreter: Regelmann, Thomas
(86) Internationale Anmeldenummer: PCT/EP2003/008101
(87) Internationale Veröffentlichungsnummer: WO 2004/012888

(56) Entgegenhaltungen:
- DE-A- 4 136 916
- FR-A- 2 590 340
- US-A- 5 699 598

## Beschreibung

Die Erfindung betrifft eine Mehrspindel-Werkzeugmaschine, umfassend ein Maschinengestell, einen ersten Spindelschlitten mit einer ersten Werkstückspindel und einen zweiten Spindelschlitten mit einer zweiten Werkstückspindel, wobei erster Spindelschlitten und zweiter Spindelschlitten linearverschieblich am Maschinengestell geführt sind, eine erste Führung und eine beabstandete zweite Führung, welche am Maschinengestell angeordnet sind, wobei die erste Werkstückspindel und die zweite Werkstückspindel zwischen den beiden Führungen angeordnet sind, und eine Werkzeugaufnahmevorrichtung.

Mit einer solchen Mehrspindel-Werkzeugmaschine lassen sich gleichzeitig mehrere Werkstücke bearbeiten.

Bei einer aus der EP 0 737 544 A2 bekannten Werkzeugmaschine nach dem Oberbegriff von Anspruch 1, mit mehreren Spindeln für die gleichzeitige oder unterschiedliche, getrennte Bearbeitung mehrerer Werkstücke, sind Teilschlitten vorgesehen, welche sich gegeneinander abstützen und einen Gesamtschlitten bilden, wobei nur der Gesamtschlitten durch eine Führungsanordnung auf dem Maschinengrundkörper geführt ist.

Weitere Mehrspindel-Werkzeugmaschinen sind beispielsweise aus der US 4,197,769, der DE 87 11 148.9 U1, der DE 87 00 343.0 U1, der IT 1295463 oder der DE 195 16 774 A1 bekannt.

Aus der DE 41 36 916 A1 ist eine Mehrspindel-Drehmaschine mit wenigstens zwei gleichgerichtet parallel nebeneinander angeordneten verschieblich gelagerten Werkstückspindeleinheiten und einem feststehenden Werkzeugträger bekannt. Die Werkstückspindeleinheiten sind unabhängig voneinander verfahrbar.

Davon ausgehend liegt der Erfindung die Aufgabe zugrunde, eine Mehrspindel-Werkzeugmaschine zu schaffen, welche bei minimiertem Platzbedarf bezüglich der Mehrzahl an Werkstückspindeln einfach aufgebaut ist.

Diese Aufgabe wird bei der eingangs genannten Mehrspindel-Werkzeugmaschine erfindungsgemäß dadurch gelöst, dass sowohl der erste Spindelschlitten als auch der zweite Spindelschlitten an der ersten Führung und der zweiten Führung geführt sind, dass der ersten Spindelschlitten einen ersten Schenkel aufweist, welcher längs der ersten Führung orientiert ist, und einen zweiten Schenkel aufweist, welcher quer zu der ersten Führung orientiert ist, wobei der zweite Schenkel des ersten Spindelschlittens an die zweite Führung gekoppelt ist, und dass der zweite Spindelschlitten einen ersten Schenkel aufweist, welcher längs der zweiten Führung orientiert ist, und einen zweiten Schenkel aufweist, welcher quer zur zweiten Führung orientiert ist, wobei der zweite Schenkel des zweiten Spindelschlittens an die erste Führung gekoppelt ist.

Erfindungsgemäß ist es vorgesehen, dass die Spindelschlitten auf den gleichen Führungen geführt sind. Dadurch ist es nicht notwendig, dass sich die Spindelschlitten gegeneinander abstützen. Da erfindungsgemäß die beiden Werkstückspindeln zwischen den beiden Führungen angeordnet sind, lässt sich der Platzbedarf für die Werkstückspindeln minimieren, da eben dieser Zwischenbereich für die Anordnung der Werkstückspindeln genutzt wird und auch keine Abstützungsanordnung zwischen den beiden Spindelschlitten notwendig ist.

Ein einfacherer Maschinenaufbau lässt sich realisieren, wenn der erste Spindelschlitten und der zweite Spindelschlitten mechanisch ungekoppelt sind, so dass sich fertigungstechnische Vorteile bei der Herstellung der erfindungsgemäßen Mehrspindel-Werkzeugmaschine ergeben. Da dann auch eine Abstützung zwischen den beiden Spindelschlitten nicht vorgesehen ist, ist die Anzahl der Verschleißteile und insbesondere Führungen minimiert, so dass auch der Wartungsaufwand minimiert ist.

Weiterhin ist es günstig, wenn der erste bzw. zweite Spindelschlitten eine L-förmige oder dreiecksförmige Gestalt aufweist, insbesondere mit einem ersten Schenkel, welcher längs der ersten bzw. zweiten Führung orientiert ist, und mit einem zweiten Schenkel, welcher quer zur ersten bzw. zweiten Führung orientiert ist. Auf diese Weise ist für eine hohe Stabilität und Steifigkeit der Spindelschlitten gesorgt, so dass diese die zugeordneten Werkstückspindeln halten können und hochpräzise Bearbeitungsvorgänge durchführbar sind. Es ist dadurch auch ein Raumbereich bereitgestellt, in dem an den jeweiligen Spindelschlitten die zugeordnete Werkstückspindel gehalten werden kann. Insbesondere lassen sich dann die beiden Spindelschlitten gegenüberstellen, so dass sich die L-Form bzw. angenäherte Dreiecksform gegenüberliegend ergänzen. Dadurch wiederum lassen sich die Werkstückspindeln zwischen den beiden Führungen platzoptimiert positionieren. Die L-Gestalt bzw. Dreiecksgestalt bezieht sich dabei mindestens auf einen Bereich der entsprechenden Spindelschlitten nahe der Führungen in einer Projektion auf diese Führungen.

Es ist vorgesehen, dass der zweite Schenkel des ersten Spindelschlittens bzw. zweiten Spindelschlittens an die zweite bzw. erste Führung gekoppelt ist, um so eine Verschieblichkeit beider Spindelschlitten auf den gleichen Führungen zu ermöglichen.

Eine hohe Stabilität bezüglich der Anordnung der Werkstückspindeln an den zugeordneten Spindelschlitten lässt sich erreichen, wenn der erste bzw. zweite Spindelschlitten eine größere Kontaktfläche mit der ersten bzw. zweiten Führung als mit der zweiten bzw. ersten Führung aufweist. Dadurch lässt es sich zum einen erreichen, dass sowohl der erste Spindelschlitten als auch der zweite Spindelschlitten auf den gleichen Führungen führbar sind. Zum anderen lässt sich dann ein Bereich an dem ersten Spindelschlitten bzw. dem zweiten Spindelschlitten bereitstellen, um die zugeordneten Werkstückspindeln zu halten.

Insbesondere weist dann der erste bzw. zweite Spindelschlitten eine größere Anzahl von Führungsschuhen für die erste bzw. zweite Führung auf als für die zweite bzw. erste Führung, um so entsprechend die größeren Kontaktflächen für die erste bzw. zweite Führung bereitzustellen.

Weiterhin ist es dann günstig, wenn die erste bzw. zweite Werkstückspindel zwischen und/oder an den beiden Schenkeln des jeweiligen Spindelschlittens sitzt. Dadurch lässt es sich erreichen, dass die jeweiligen Werkstückspindeln einander zugeordnet zwischen den beiden Führungen sitzen und so bei hoher Stabilität ihrer Verschiebungsführung auf den Führungen und hoher Steifigkeit der Anordnung der Platzbedarf für die Werkstückspindeln minimiert ist.

Insbesondere ist es günstig, wenn die zweiten Schenkel des ersten Spindelschlittens und des zweiten Spindelschlittens parallel zueinander sind, um so den Platzbedarf zu minimieren.

Vorteilhafterweise sind die beiden Führungen parallel zueinander, um so auf einfache Weise eine Linearverschieblichkeit der beiden Spindelschlitten zu ermöglichen.

Bei einer fertigungstechnisch einfachen Ausführungsform umfassen die Führungen Führungsschienen, auf denen dann über entsprechende Führungsschuhe die Spindelschlitten geführt sind.

Für die Bearbeitung von Werkstücken besonders vorteilhaft ist es, wenn die erste Werkstückspindel und die zweite Werkstückspindel in einer Verschiebungsrichtung (Z-Richtung) jeweils linearverschieblich an dem zugeordneten Spindelschlitten angeordnet sind. Dadurch lassen sich dann Werkstücke, welche an den jeweiligen Werkstückspindeln angespannt sind, relativ zu insbesondere translationsfest am Maschinengestell angeordneten Werkzeugen verschieben. Es können dann Fräsvorgänge und Drehbearbeitungsvorgänge durchgeführt werden, um so beispielsweise Gleichlaufgelenke (homokinetische Gelenke) herzustellen.

Insbesondere ist dabei die Verschiebungsrichtung (Z-Richtung) einer Werkstückspindel quer und insbesondere senkrecht zu einer Verschiebungsrichtung (X-Richtung) des zugeordneten Spindelschlittens. Über den Spindelschlitten läßt sich dann eine Zuführung und Abführung von Werkstücken zu den Werkzeugen erreichen und darüber hinaus eine Feinpositionierung der Werkstücke relativ zu den Werkzeugen, und über die Werkstückspindeln läßt sich der Höhenabstand zwischen Werkzeugen und Werkstücken variieren.

Vorteilhafterweise sind die ersten und zweiten Führungen horizontal ausgerichtet am Maschinengestell angeordnet. Es läßt sich dann auch auf einfache Weise eine Vertikalbearbeitung eines Werkstücks realisieren, wobei hierzu insbesondere die Werkstückspindeln vertikal an dem zugeordneten Spindelschlitten geführt sind.

Weiterhin ist es günstig, wenn die Werkzeugaufnahmevorrichtung eine erste Werkzeugaufnahme und eine zweite Werkzeugaufnahme aufweist, so daß mit zwei unterschiedlichen Werkzeugen (die identisch ausgebildet sein können) zwei Werkstücke gleichzeitig bearbeitbar sind.

Um eine solche gleichzeitige Bearbeitung zu ermöglichen, sind günstigerweise die beiden Werkzeugaufnahmen zwischen den beiden Führungen angeordnet.

Ganz besonders vorteilhaft ist es, wenn die beiden Werkzeugaufnahmen an einer Schwinge angeordnet sind, so daß diese sich synchron bewegen lassen und insbesondere relativ zum Maschinengestell und damit zu den Werkstückspindeln verschwenken lassen.

Eine Vielzahl von Bearbeitungsmöglichkeiten eines Werkstücks ergeben sich, wenn die Werkzeugaufnahmevorrichtung schwenkbar am Maschinengestell angeordnet ist und dann um eine Achse quer und/oder parallel zur Verschiebungsrichtung der Spindelschlitten schwenkbar ist. Es lassen sich auf diese Weise beispielsweise programmierbare Laufbahnen für ein Gleichla ufgelenk als Werkstück herstellen. Es können Fräsvorgänge in einer definierten Winkelstellung bezüglich einer Z-Richtung, der Verschiebungsrichtung der Werkstückspindeln, durchgeführt werden.

Die Bewegung der Spindelschlitten, der Werkstückspindeln und der Werkzeugaufnahmevorrichtung ist insbesondere programmierbar gesteuert, um so ein Werkstück hochpräzise definiert gesteuert bearbeiten zu können.

Insbesondere ist es dabei vorgesehen, daß die beiden Spindelschlitten synchron oder unabhängig voneinander gesteuert beweglich sind. Eine synchrone Bewegung ist beispielsweise vorteilhaft, wenn in kurzen Zeiten ein größerer Weg durchschritten werden soll, ohne daß es auf höchste Präzision ankommt. Beispielsweise bei der Aufnahme von zu bearbeitenden Werkstücken und bei der Abgabe von bearbeiteten Werkstücken ist dies vorteilhaft. Ist eine hochpräzise Bearbeitung notwendig, dann ist es günstiger, wenn die Spindelschlitten unabhängig voneinander gesteuert beweglich sind, um so beispielsweise Korrekturbewegungen unabhängig voneinander durchführen zu können. Die entsprechenden Bewegungsweisen der beiden Spindelschlitten werden vorzugsweise über eine Steuerungseinrichtung gesteuert.

Es kann auch vorgesehen sein, daß die beiden Werkstückspindeln synchron oder unabhängig voneinander gesteuert beweglich sind. Diese Bewegung kann in X-Richtung und/oder Z-Richtung (über die Werkstückspindeln) gesteuert sein.

Bei einer Ausführungsform ist eine Stützführung für den ersten Spindelschlitten und/oder zweiten Spindelschlitten vorgesehen. Dadurch läßt sich ein geschlossenes Führungssystem ausbilden, über das sich optimal Kräfte aufnehmen lassen. Eine solche Stützführung zusätzlich zu der ersten und zweiten Führung ist insbesondere vorteilhaft, wenn zum Antrieb der Spindelschlitten Linearmotoren vorgesehen sind. Linearmotoren verursachen große Kräfte, welche in der Größenordnung von 40.000 N liegen können. Über die Stützführung lassen sich solche Kräfte aufnehmen. Insbesondere ist die Stützführung so angeordnet und ausgebildet, daß durch einen Linearmotor ausgeübte Kräfte aufnehmbar sind und dabei horizontale und vertikale Kräfte aufnehmbar sind.

Es ist dann günstig, wenn die Stützführung oberhalb der ersten Führung und zweiten Führung für die Spindelschlitten angeordnet ist. Dadurch wird ein Raum bereitgestellt, an welchem sich der Linearmotor anordnen läßt, nämlich eben zwischen der Stützführung und der ersten bzw. zweiten Führung. Bei dieser Anordnung wiederum lassen sich dann durch die beabstandete Stützführung die entsprechenden Kräfte, welche von dem Linearmotor ausgeübt werden, definiert aufnehmen.

Insbesondere umfaßt die Stützführung eine erste Führungseinrichtung, welche mit einer Erstreckung in der Verschiebungsrichtung an dem zugeordneten Spindelschlitten angeordnet ist, und eine zweite korrespondierende Führungseinrichtung, welche am Maschinengestell angeordnet ist. Bei dieser Ausbildung lassen sich entsprechend optimiert Kräfte aufnehmen.

Es ist dann günstig, wenn zwischen der Stützführung und der ersten Führung bzw. zweiten Führung ein Linearmotor für den zugeordneten Spindelschlitten sitzt. Beispielsweise kann ein Primärteil an dem Schlitten angeordnet werden und zwar unterhalb der Stützführung, und ein Sekundärteil an dem Maschinengestell angeordnet werden und zwar wiederum unterhalb der Stützführung.

Vorzugsweise sitzt das erste Führungsteil an einer Seitenwand des zugeordneten Spindelschlittens, so daß die Masse eines Spindelschlittens nicht wesentlich erhöht werden muß, wenn eine zusätzliche Stützführung vorgesehen wird.

Die nachfolgende Beschreibung bevorzugter Ausführungsformen dient im Zusammenhang mit der Zeichnung der näheren Erläuterung der Erfindung. Es zeigen:
- Figur 1: eine seitliche Schnittansicht eines Ausführungsbeispiels einer erfindungsgemäßen Mehrspindel-Werkzeugmaschine;
- Figur 2: eine Schnittansicht längs der Linie 2-2 gemäß Figur 1;

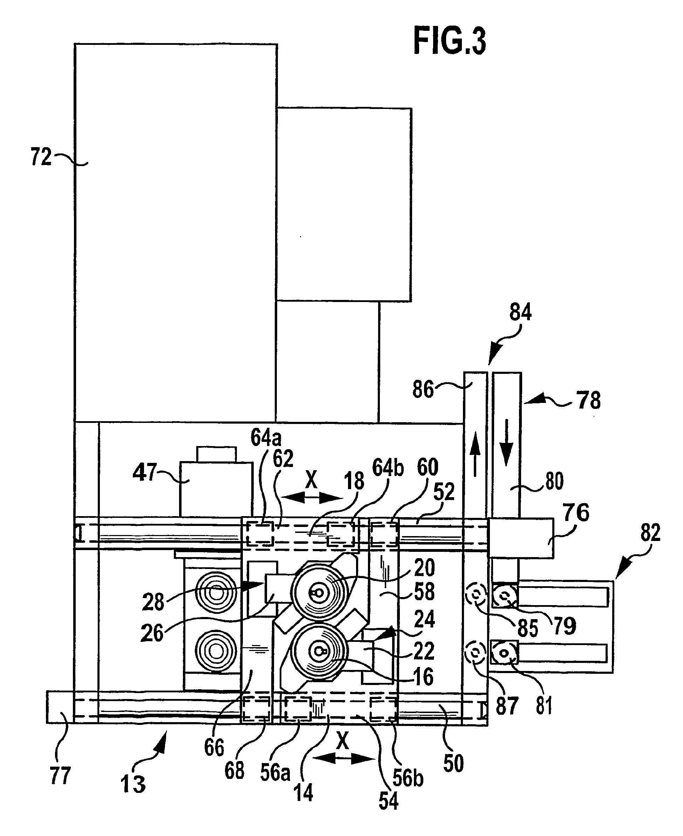

- Figur 3: eine Draufsicht auf die Mehrspindel-Werkzeugmaschine gemäß Figur 1;
- Figur 4: eine Teildarstellung einer weiteren Ausführungsform eines Spindelschlittens, und
- Figur 5: eine schematische Teildarstellung einer Führungseinrichtung zur linearverschieblichen Führung des Schlittens gemäß Figur 4.

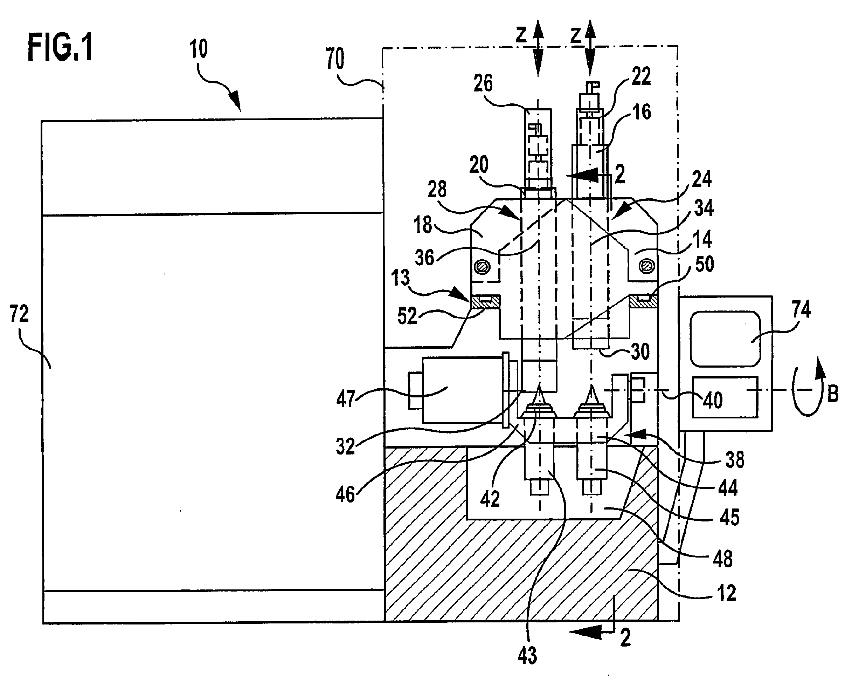

Ein Ausführungsbeispiel einer erfindungsgemäßen Mehrspindel-Werkzeugmaschine ist eine Zweispindel-Werkzeugmaschine, welche in Figur 1 als Ganzes mit 10 bezeichnet ist; sie umfaßt ein Maschinengestell 12, über welches die Mehrspindel-Werkzeugmaschine 10 ausgerichtet auf einer Unterlage positionierbar ist. An dem Maschinengestell 12 ist auf einem Aufsatzständer 13 ein erster Spindelschlitten 14 in einer Richtung X linearverschieblich geführt. Diese Richtung X ist insbesondere eine horizontale Richtung. Der erste Spindelschlitten 14 trägt eine erste Werkstückspindel 16, an welcher ein zu bearbeitendes Werkstück drehbar fixierbar ist. Die erste Werkstückspindel 16 ist an dem ersten Spindelschlitten 14 in einer Querrichtung Z zur Richtung X verschieblich geführt, so daß der Abstand eines an der ersten Werkstückspindel 16 gehaltenen Werkstücks relativ zum Maschinengestell 12 einstellbar ist. Eine Drehachse der ersten Werkstückspindel 16, um die ein gehaltenes Werkstück drehbar ist, ist parallel zu der Z-Richtung.

Weiterhin ist ein zweiter Spindelschlitten 18 vorgesehen, welcher ebenfalls in der X-Richtung linearverschieblich am Maschinengestell 12 geführt ist. Dieser zweite Spindelschlitten 18 hält eine zweite Werkstückspindel 20, die in der Z-Richtung linearverschieblich an dem zweiten Spindelschlitten 18 gehalten ist.

Die beiden Werkstückspindeln 16 und 20 sind insbesondere im wesentlichen parallel zueinander ausgerichtet.

Zum Antrieb der ersten Werkstückspindel 16 in ihrer Verschiebungsbewegung längs der Z-Achse ist ein erster Antrieb 22 vorgesehen. Es kann sich dabei beispielsweise um einen hydraulischen Antrieb, einen Kugelgewindetrieb oder einen Linearmotor handeln. Eine Antriebseinheit des ersten Antriebs 22 sitzt an dem ersten Spindelschlitten 14 und ist mit diesem in X-Richtung mitbewegt.

Zur Führung der ersten Werkstückspindel 16 weist der erste Spindelschlitten 14 eine als Ganzes mit 24 bezeichnete Führungsvorrichtung auf, an welcher die erste Werkstückspindel 16 durch den ersten Antrieb 22 angetrieben in Z-Richtung verschiebbar ist. Die Z-Richtung ist dabei insbesondere vertikal ausgerichtet, das heißt parallel zur Schwerkraftrichtung.

Zur Bewegung der zweiten Werkstückspindel 20 relativ zum zweiten Spindelschlitten 18 ist ein zweiter Antrieb 26 vorgesehen, welcher die Linearverschiebung der zweiten Werkstückspindel 20 an einer Führungsvorrichtung 28 in Z-Richtung relativ zum zweiten Spindelschlitten 18 antreibt.

An ihren unteren Enden sind die Werkstückspindeln 16 und 20 jeweils mit einem Werkstückhalter 30, 32 versehen, an welchem die jeweiligen Werkstücke um Längsachsen 34, 36 der jeweiligen Werkstückspindeln 16, 20 rotierbar fixierbar sind.

An dem Maschinengestell 12 ist eine Werkzeugaufnahmevorrichtung 38 beispielsweise schwenkbar angeordnet, wobei eine Schwenkachse 40 quer zu r Z-Richtung und X-Richtung orientiert ist und insbesondere horizontal ausgerichtet ist. Die Werkzeugaufnahmevorrichtung 38 umfaßt bei einer Zweispindel-Werkzeugmaschine eine erste Werkzeugaufnahme 42 und eine zweite Werkzeugaufnahme 44, welche beabstandet zueinander sind. Die Werkzeugaufnahmen 42, 44 sitzen an rotierbar angetriebenen Werkzeugspindeln 43, 45, so daß die entsprechend gehaltenen Werkzeuge wie Fräswerkzeuge oder Bohrwerkzeuge um eine Spindelachse rotierbar sind. Es lassen sich dann gleichzeitig mittels jeweiliger Werkzeuge zwei Werkstücke bearbeiten, wobei ein erstes Werkstück an der ersten Werkstückspindel 16 gehalten ist und ein zweites Werkstück an der zweiten Werkstückspindel 20 gehalten ist.

Die beiden Werkzeugaufnahmen 42 und 44 sitzen an einer jochförmigen Schwinge 46, welche um die Schwenkachse 40 in einer Schwenkrichtung B (Figur 1) schwenkbar ist. Zur Durchführung der Schwenkbewegung ist ein Antrieb 47 vorgesehen. Innerhalb eines bestimmten Schwenkbereichs ist dabei jede Schwenkstellung der Werkzeugaufnahmevorrichtung 38 einstellbar, so daß bei einer bestimmten eingestellten Schwenkstellung (bei einem bestimmten eingestellten Schwenkwinkel B) die jeweiligen an den Werkstückspindeln 16 und 20 gehaltenen Werkstücke über die an der Werkzeugaufnahmevorrichtung 38 fixierten und insbesondere in den Werkzeugaufnahmen 42, 44 vorhandenen Werkzeuge bearbeitbar sind. Beispielsweise läßt sich so ein Gleichlaufgelenk herstellen, welches Kugellaufbahnen in einem Achszapfen und in einer Nabe aufweist.

Insbesondere ist es möglich, über entsprechende Werkzeuge eine Weichfräsbearbeitung, Schleifbearbeitung oder Hartfräsbearbeitung durchzuführen. Es ist auch möglich, eine Hartdrehbearbeitung durchzuführen.

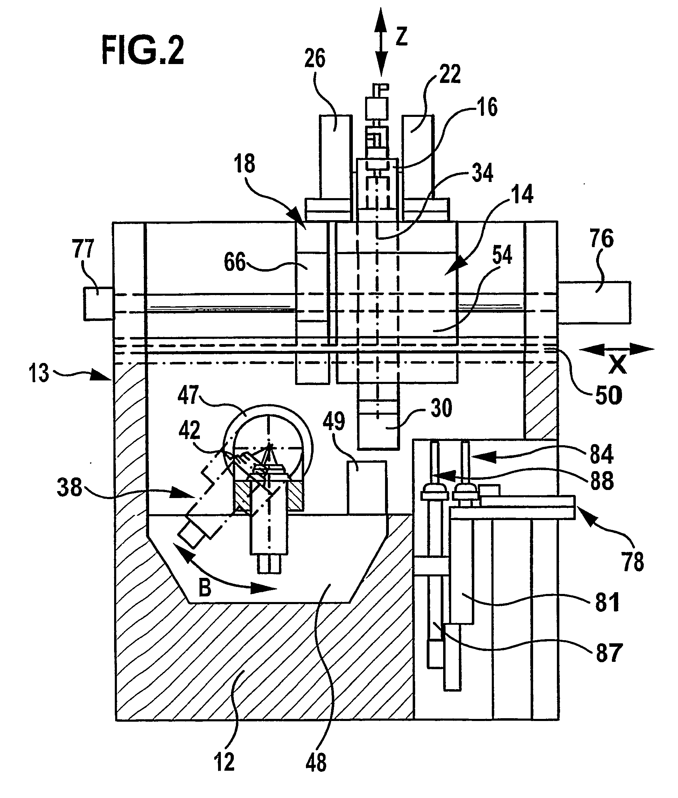

Dazu sind entsprechende Zusatzeinrichtungen wie beispielsweise eine oder mehrere Drehkonsolen 49 mit entsprechendem Drehstahl (Figur 2) oder zusätzliche Spindel vorgesehen, welche im Bereich der Bearbeitungszone der Werkstücke angeordnet sind.

Es ist auch möglich, eine Folgebearbeitung eines Werkstücks durchzuführen, indem dieses beispielsweise zuerst an der ersten Werkstückspindel 16 gehalten mit einem ersten Werkzeug bearbeitet wird und anschließend an die Werkstückspindel 20 übergeben und dann mit einem zweiten Werkzeug bearbeitet wird.

An dem Maschinengestell 12 ist ein Schwenkraum 48 gebildet, damit die Werkzeugaufnahmevorrichtung 38 in einem bestimmten Schwenkbereich ungehindert an dem Maschinengestell 12 schwenkbar ist. Durch diesen Schwenkraum 48 lassen sich auch Späne und dergleichen abführen.

Die Spindelschlitten 14 und 18 sind bezogen auf die Z-Richtung oberhalb der Werkzeugaufnahmevorrichtung 38 in der X-Richtung verschieblich geführt. Dazu ist eine erste Führung 50 vorgesehen, welche insbesondere eine Führungsschiene umfaßt, welche in einem Abstand zu der Werkzeugaufnahmevorrichtung 38 oberhalb dieser angeordnet ist. Ferner ist eine zweite Führung 52 vorgesehen, welche parallel beabstandet zu der ersten Führung 50 insbesondere auf der gleichen Höhe in Z-Richtung über der Werkzeugaufnahmevorrichtu ng 38 angeordnet ist wie die erste Führung 50. Die zweite Führung 52 umfaßt insbesondere wiederum eine Führungsschiene. Die beiden Führungen 50 und 52 sind insbesondere horizontal angeordnet. Die Führungen 50, 52 sitzen an dem Aufsatzständer 13.

Es kann auch vorgesehen sein, daß die Führungen 50, 52 in Z-Richtung versetzt angeordnet sind, um so beispielsweise einen Spindelschlitten in seiner Höhenrichtung zusätzlich versteifen zu können, wenn dies notwendig ist.

Der erste Spindelschlitten 14 ist in seinem den Führungen 50, 52 zugewandten Bereich derart L-förmig oder dreieckförmig ausgebildet, daß er einen ersten Schenkel 54 umfaßt, welcher längs der ersten Führung 50 orientiert ist und auf dieser geführt ist. Beispielsweise sind zwei beabstandete Führungsschuhe 56a, 56b vorgesehen, um den ersten Schenkel 54 auf der ersten Führung 50 linearverschieblich zu führen. Mit dem ersten Schenkel 54 ist ein zweiter Schenkel 58 verbunden, welcher quer zu dem ersten Schenkel 54 orientiert ist und welcher an die zweite Führung 52 gekoppelt ist, beispielsweise mittels eines Führungsschuhs 60, um den zweiten Schenkel 58 linearverschieblich auf der zweiten Führung 52 zu führen.

Zwischen den beiden Schenkeln 54 und 58 sitzt an diesen die erste Werkstückspindel 16 zwischen den beiden Führungen 50 und 52.

Die Kontaktfläche des ersten Spindelschlittens 14 mit der ersten Führung 50 zur linearverschieblichen Kopplung an diese ist größer als die Kontaktfläche zur Kopplung an die zweite Führung 52. Beispielsweise ist die erste Kontaktfläche über die zwei Führungsschuhe 56a, 56b gebildet, während sie für die zweite Führung 52 nur über den einen Führungsschuh 60 gebildet ist.

Der zweite Spindelschlitten 18 umfaßt ebenfalls einen ersten Schenkel 62, welcher längs der zweiten Führung 52 orientiert ist und beispielsweise an diese über zwei Führungsschuhe 64a, 64b gekoppelt ist. Quer zu diesem ersten Schenkel 62 sitzt ein zweiter Schenkel 66, welcher an die erste Führung 50 über einen Führungsschuh 68 gekoppelt ist. Damit hat auch der zweite Spindelschlitten 18 eine L-förmige oder dreieckförmige Außengestalt, wobei die Kontaktfläche mit der zweiten Führung 52 größer ist als mit der ersten Führung 50. Die zweite Werkstückspindel 20 sitzt zwischen dem ersten Schenkel 62 und dem zweiten Schenkel 66 an diesen zwischen den beiden Führungen 50 und 52 und ist der anderen Werkstückspindel 16 zugewandt mit einem freien Zwischen bereich zwischen den beiden Werkstückspindeln 16, 20.

Die L-förmige oder dreieckförmige Gestalt bezieht sich dabei auf einen Querschnitt in einer Projektion auf die durch die beiden Führungen 50, 52 aufgespannte Ebene mindestens im Bereich der Ankopplung der Spindelschlitten 14 bzw. 18 an diese Führungen 50 und 52.

Die beiden zweiten Schenkel 58 und 66 der jeweiligen Spindelschlitten 14 und 18 sind parallel zueinander orientiert. Die beiden Spindelschlitten 14 und 18 sind mechanisch ungekoppelt, so daß sie grundsätzlich unabhängig voneinander in X-Richtung beweglich sind. Die beiden Werkstückspindeln 16 und 20 sind einander zugewandt zwischen den beiden Führungen 50, 52 platzoptimiert an den jeweiligen Spindelschlitten 14 und 18 gehalten, wobei sie zwischen den jeweiligen ersten Schenkeln 54, 62 und zweiten Schenkeln 58, 66 an diesen sitzen. Dadurch ist für eine ausreichende Stabilität gesorgt und für einen Bereich gesorgt, an dem sich die entsprechenden Führungsvorrichtungen 24 und 28 für die Linearführung der Werkstückspindeln 16 und 20 in Z-Richtung ausbilden lassen.

Die erfindungsgemäße Mehrspindel-Werkzeugmaschine ist, wie in Figur 1 angedeutet, mit einem Schutzgehäuse 70 versehen, durch welches ein Arbeitsbereich der beweglichen Spindelschlitten 14, 18, der beweglichen Werkstückspindeln 16 und 20 und der beweglichen Werkzeugaufnahmevorrichtung 38 (bezüglich Schwenkbarkeit und Rotation der Werkzeuge selber) vom Außenraum abkapselbar ist.

Zur Aufnahme von beispielsweise elektrischen Versorgungseinrichtungen ist ein Schaltgehäuse 72 vorgesehen.

Über eine Bedienungstafel 74, welche insbesondere außerhalb des Schutzgehäuses 70 angeordnet ist, kann ein Bediener die entsprechenden Betriebsmodi der Werkzeugmaschine 10 einstellen.

Die Spindelschlitten 14 und 18 sind durch insbesondere unabhängige Antriebe 76 und 77 (Figur 2) bezüglich ihrer Verschiebungsbewegungen längs der X-Richtung angetrieben. Dabei kann es sich beispielsweise um Kugelgewindetriebe, hydraulische Antriebe oder Linearmotorantriebe handeln. Die Verfahrbewegungen der Spindelschlitten 14, 18 sind programm-steuerbar.

Zur Zuführung von zu bearbeitenden Werkstücken ist eine Zuführungseinrichtung 78 vorgesehen, welche insbesondere ein Zuführungsband 80 umfasst. Über Zuführungsschieber 82 lassen sich zwei Werkstücke in einem bestimmten Abstand so positionieren, dass sie von den beiden Werkstückspindeln 16 und 20 aufnehmbar sind und dann einer Bearbeitungszone an der Werkzeugaufnahmevorrichtung 38 zuführbar sind. Die Zuführungseinrichtung umfasst insbesondere Werkstückheber 79, 81, um die Werkstücke in Z-Richtung relativ zum Maschinengestell 12 anheben zu können und damit den Werkstückspindeln 16, 20 zuführen zu können.

Über eine Abführungseinrichtung 84, welche insbesondere ein Abführungsband 86 umfaßt, lassen sich fertig bearbeitete Werkstücke abführen. Insbesondere sind Werkstückhebeeinrichtungen 85, 87 vorgesehen, um die bearbeiteten Werkstücke von den Werkstückspindeln 16, 20 auf das Abführungsband 86 heben zu können.

Die erfindungsgemäße Mehrspindel-Werkzeugmaschine 10 funktioniert wie folgt:

Die zu bearbeitenden Werkstücke werden über die Zuführungseinrichtung 78, die Zuführungsschieber 82 und die Werkstückheber 79, 81 so positioniert, daß ein erstes zu bearbeitendes Werkstück von der ersten Werkstückspindel 16 und ein zweites zu bearbeitendes Werkstück von der zweiten Werkstückspindel 20 aufnehmbar ist. Die beiden Spindelschlitten 14 und 18 werden dabei so bezüglich der Zuführungseinrichtung 78 positioniert, daß eben die Werkstückaufnahme möglich ist.

Die beiden Spindelschlitten 14 und 18 werden dann zu der Werkzeugaufnahmevorrichtung 38 hin verfahren um den gewünschten Bearbeitungsvorgang in Gang setzen zu können. An den beiden Werkzeugaufnahmen 42, 44 sind die entsprechenden Werkzeuge fixiert, um beispielsweise eine Fräsbearbeitung des Rohlings zu ermöglichen. Es lassen sich gleichzeitig zwei Werkstücke bearbeiten.

Durch programm-gesteuerte Verfahrung der Werkstückspindeln 16 und 20 in Z-Richtung läßt sich ein definierter Abstand relativ zu der Werkzeugaufnahmevorrichtung 38 einstellen und so beispielsweise die Frästiefe einstellen und während der Bearbeitung variieren. Durch Verfahrung der Spindelschlitten 14, 18 in X-Richtung während der Bearbeitung lassen sich ebenfalls entsprechende Bearbeitungsvorgänge durchführen.

Die Werkzeugaufnahmevorrichtung 38 ist während der Bearbeitung in einer bestimmten Schwenkstellung B, um so beispielsweise in einer bestimmten Richtung Aussparungen herstellen zu können oder bestimmte Winkelanstellungen zu ermöglichen. Über die Werkstückspindeln 16 und 20 lassen sich die an ihnen gehaltenen Werkstücke drehen.

Über die erfindungsgemäße Mehrspindel-Werkzeugmaschine 10 lassen sich beispielsweise Gleichlaufgelenke (homokinetische Gelenke) herstellen. In Figur 2 sind entsprechende Werkstücke mit dem Bezugszeichen 88 angedeutet.

Ein homokinetisches Gelenk umfasst einen Achszapfen, eine Nabe und einen Kugelkäfig. Je nach eingestelltem Bearbeitungsprogramm lassen sich Aussparungen wie beispielsweise Kugellaufbahnen im Achszapfen schleifen, drehen und/oder fräsen, Naben schleifen, drehen und/oder fräsen, der Kugelkäfig fräsen, drehen und/oder schleifen. Mit der erfindungsgemäßen Mehrspindel-Werkzeugmaschine lassen sich alle diese Bearbeitungsvorgänge bei entsprechender Programmsteuerung durchführen.

Die beiden Spindelschlitten 14 und 18 sind unabhängig voneinander auf den Führungen 50 und 52 verschiebbar, wobei über eine Steuerungseinrichtung eine synchrone Bewegung herstellbar ist. Die beiden Spindelschlitten 14 und 18 können auch individuell unabhängig voneinander gesteuert durch die Steuerungseinrichtung verfahren werden, um insbesondere Korrekturbewegungen durchführen zu können, so dass beide Werkstücke individuell hochpräzise bearbeitbar sind.

Die L-förmige oder dreieckförmige Ausbildung der beiden Spindelschlitten 14 und 18 bezüglich der Ankopplung an die Führungen 50 und 52 ermöglicht eine platzsparende Anordnung der Werkstückspindeln 16 und 20 bei hoher Stabilität der Schlittenführung in X-Richtung. Dadurch lässt sich bei minimierten Maschinenabmessungen eine hochpräzise Vertikalbearbeitung von zwei Werkstücken gleichzeitig durchführen.

Bei einem Ausführungsbeispiel, bei welchem die Spindelschlitten über einen Linearmotor angetrieben werden, ist es vorteilhaft, wenn eine zusätzliche Stützführung vorgesehen ist, um die Kräfte, die durch die Linearmotoren ausgeübt werden, aufnehmen zu können. Solche Kräfte können in der Größenordnung von 40.000 N liegen.

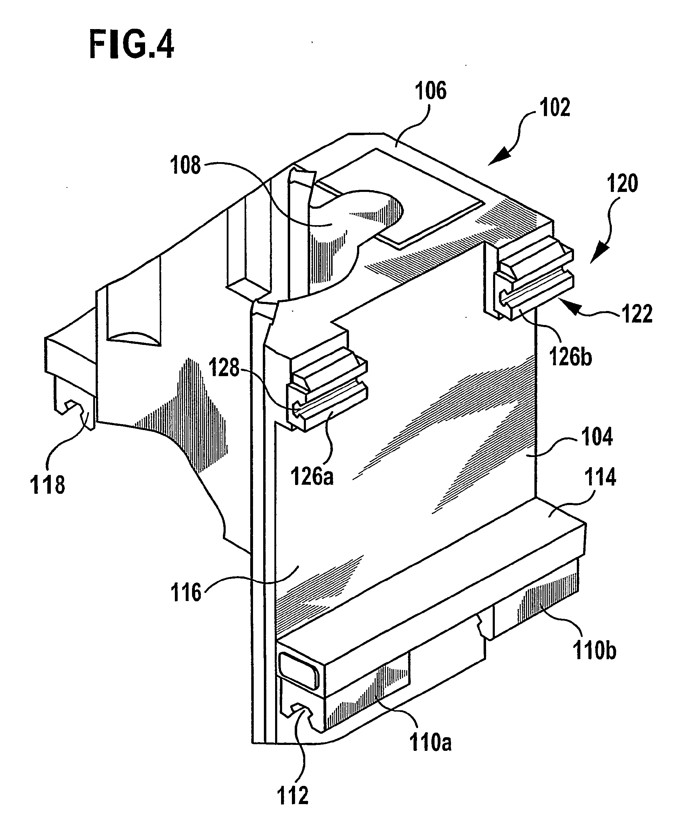

In Figur 4 ist in Teildarstellung ein Ausführungsbeispiel für einen entsprechenden Spindelschlitten gezeigt, welcher dort als Ganzes mit 102 bezeichnet ist. Der Spindelschlitten 102 entspricht beispielsweise dem ersten Spindelschlitten 14. Der Spindelschlitten 102 weist einen ersten Schenkel 104 und einen zweiten Schenkel 106 auf, wobei der zweite Schenkel 106 quer zu dem ersten Schenkel 104 orientiert ist. Dadurch hat der Spindelschlitten 102 eine L-förmige oder dreieckförmige Gestalt. An den beiden Schenkeln 104 und 106 ist, wie oben in Zusammenhang mit den Spindelschlitten 14 und 18 beschrieben, eine Werkstückspindel linearverschieblich gehalten (in der Figur 4 nicht gezeigt). Der Spindelschlitten 102 weist eine Aufnahme 108 für die zugeordnete Werkstückspindel auf.

Der Spindelschlitten 102 weist einen ersten Führungsschuh 110a und einen zweiten Führungsschuh 110b auf, welche zur Führung des Spindelschlittens 102 in der Führung 50 dienen. Die Führung 50 umfaßt dazu beispielsweise eine Führungsleiste mit einem Führungssteg, welcher sich in der Verschiebungsrichtung X erstreckt und dabei nach oben weist. Die Führungsschuhe 110a und 110b weisen jeweils eine Aufnahme 112 für diese Führungsleiste auf; die Führungsleiste ist durch die Aufnahmen 112 aufgenommen. Die Führungsleiste und die Aufnahmen 112 sind dabei so aneinander angepaßt, daß eine Querbewegung zwischen den Führungsschuhen 110a, 110b und der Führungsleiste quer zur Verschiebungsrichtung X im wesentlichen gesperrt ist. Dies wird beispielsweise durch eine formschlüssige angepaßte Ausbildung der Aufnahmen 112 und der Führungsleiste erreicht.

Bei dem in Figur 4 gezeigten Ausführungsbeispiel sitzen die Führungsschuhe 110a, 110b an einem Halteelement 114, welches an einer Seitenwand 116 des ersten Schenkels 104 gehalten ist.

An dem zweiten Schenkel 106 sitzt ein weiterer Führungsschuh 118, welcher insbesondere dem zweiten Führungsschuh 110b gegenüberliegend angeordnet ist. Über diesen Führungsschuh 118 ist für eine Führung des Spindelschlittens 102 an der zu der ersten Führung 50 beabstandeten zweiten Führung 52 gesorgt. Entsprechend ist der Führungsschuh 118 auf eine Führungsleiste der zweiten Führung 52 aufgesetzt, wie im Zusammenhang mit den Führungsschuhen 110a und 110b beschrieben. Vorzugsweise liegt der Führungsschuh 118 auf der gleichen vertikalen Höhe wie die Führungsschuhe 110a und 110b.

Es ist jedoch grundsätzlich auch möglich, daß ein Höhenversatz zwischen dem Führungsschuh 118 und den Führungsschuhen 110a, 110b vorliegt.

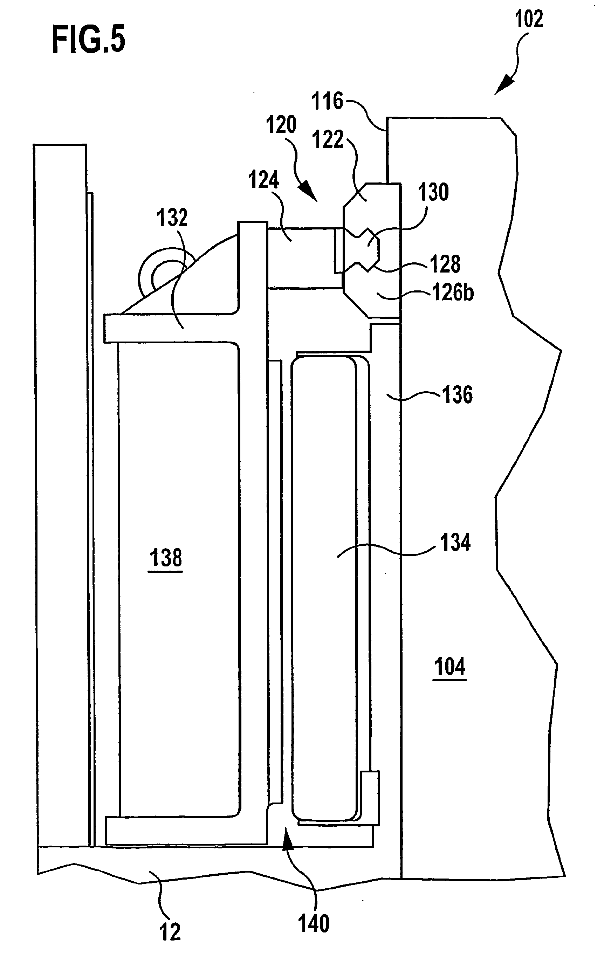

Eine Führungsvorrichtung zur Führung des Schlittens 102 an der erfindungsgemäßen Werkzeugmaschine umfaßt zusätzlich eine Stützführung 120 (Figuren 4 und 5). Die Stützführung weist eine erste Führungseinrichtung 122 auf, welche an dem Schlitten 102 angeordnet ist, und eine zweite Führungseinrichtung 124, welche mit der ersten Führungseinrichtung 122 korrespondiert und an dem Maschinengestell 12 angeordnet ist.

Die erste Führungseinrichtung 122 ist an dem ersten Schenkel 104 und insbesondere dessen Seitenwand 116 angeordnet. Sie umfaßt beispielsweise zwei beabstandete Führungsschuhe 126a und 126b. Die erste Führungseinrichtung 122 mit ihren Führungsschuhen 126a, 126b ist an dem ersten Schenkel 104 bezogen auf die Z-Richtung oberhalb der Führungsschuhe 110a, 110b für die Führung 50 angeordnet.

Die Führungsschuhe 126a, 126b weisen jeweils eine Aufnahme 128 auf, in welche eine Führungsleiste 130 der zweiten Führungseinrichtung 124 eingreift und insbesondere derart formschlüssig eingreift, daß eine Bewegung quer zur Verschiebungsrichtung X gesperrt ist.

Vorzugsweise ist die Aufnahme 128 zu einer Richtung hin offen, welche quer und insbesondere senkrecht zu der Richtung liegt, in welcher die Aufnahmen 112 der Führungsschuhe 110a, 110b offen sind. Die zweite Führungseinrichtung 124 mit ihrer Führungsleiste 130 kann dadurch seitlich in die Führungsschuhe 126a, 126 b eintauchen.

Die Aufnahme 128 weist eine Erstreckung längs der Verschiebungsrichtung X auf. Die Führungsleiste 130 weist ebenfalls eine Erstreckung in diese Verschiebungsrichtung auf, wobei die Führungsleiste 130 durchgehend ausgebildet ist. Sie sitzt über einem Haltewinkel 132 (Figur 5) ortsfest gegenüber dem Maschinengestell 12 bezogen auf die Z-Richtung oberhalb der Führungen 50 und 52.

Zwischen dem Halteelement 114, welches wiederum die Führungsschuhe 110a, 110b für die erste Führung 50 hält, und der ersten Führungseinrichtung 122 sitzt an dem Spindelschlitten 102 an dem ersten Schenkel 104 ein entsprechendes Element eines Linearmotors. Bei einem Kurzstator-Linearmotor sitzt an dem Schenkel 104 ein Stator (Primärteil) 134. Zur Fixierung des Primärteils ist ein Halterahmen 136 vorgesehen, welcher wiederum an der Seitenwand 116 des ersten Schenkels 104 fixiert ist.

Ein Linearmotor 140 ist durch ein Sekundärteil 138, welches mehrere Sekundärelemente umfassen kann, und das Primärteil 134 gebildet. Das Sekundärteil 138 ist dann an dem Haltewinkel 132 dem Primärteil 134 gegenüberliegend und diesem zugewandt angeordnet.

Es kann auch vorgesehen sein, daß der Stator 134 an dem Haltewinkel 132 sitzt und das Sekundärteil an dem Schlitten 102 sitzt (Langstator-Linearmotor).

Durch die Stützführung 120 lassen sich die durch den Linearmotor 140 verursachten Kräfte aufnehmen, so daß ein geschlossenes Führungssystem für den Schlitten 102 gebildet ist. Da die Kräfte des Linearmotors 140 im wesentlichen quer zur Z-Richtung wirken, sind die Aufnahmen 128 der Führungsschuhe 126a, 126b auch quer zur Z-Richtung offen. Die Stützführung 120 ist vertikal beabstandet zur ersten Führung 50 und zur zweiten Führung 52.

Es ist ein zweiter Spindelschlitten vorgesehen, welcher dem Spindelschlitten 18 entspricht. Dieser zweite Spindelschlitten (in der Zeichnung nicht gezeigt) ist grundsätzlich gleich ausgebildet wie der oben beschriebene Spindelschlitten 102, wobei er jedoch in seiner L-förmigen bzw. dreieckförmigen Ausgestaltung so angepaßt ist, daß er zu dem Spindelschlitten 102 korrespondiert, das heißt derart spiegelsymmetrisch ausgebildet ist, daß sein erster Schenkel, welcher die größere Führungsfläche aufweist, parallel beabstandet ist zum ersten Schenkel 104 des Spindelschlittens 102, und sein zweiter Schenkel, an welchem der einzelne Führungsschuh sitzt, parallel beabstandet ist zum zweiten Schenkel 106 des Spindelschlittens 102.

Ansonsten funktioniert die entsprechende Werkzeugmaschine wie oben beschrieben.

## Patentansprüche

1. Mehrspindel-Werkzeugmaschine, umfassend ein Maschinengestell (12), einen ersten Spindelschlitten (14) mit einer ersten Werkstückspindel (16) und einen zweiten Spindelschlitten (18) mit einer zweiten Werkstückspindel (20), wobei erster Spindelschlitten (14) und zweiter Spindelschlitten (18) linearverschieblich am Maschinengestell (12) geführt sind, eine erste Führung (50) und eine beabstandete zweite Führung (52), welche am Maschinengestell (12) angeordnet sind, wobei die erste Werkstückspindel (16) und die zweite Werkstückspindel (20) zwischen den beiden Führungen (50, 52) angeordnet sind, und eine Werkzeugaufnahmevorrichtung (38),
**dadurch gekennzeichnet, dass** sowohl der erste Spindelschlitten (14) als auch der zweite Spindelschlitten an der ersten Führung (50) und der zweiten Führung (52) geführt sind, dass der ersten Spindelschlitten (14) einen ersten Schenkel (54) aufweist, welcher längs der ersten Führung (50) orientiert ist, und einen zweiten Schenkel (58) aufweist, welcher quer zu der ersten Führung (50) orientiert ist, wobei der zweite Schenkel (58) des ersten Spindelschlittens (14) an die zweite Führung (52) gekoppelt ist, und dass der zweite Spindelschlitten (18) einen ersten Schenkel (62) aufweist, welcher längs der zweiten Führung (52) orientiert ist, und einen zweiten Schenkel (66) aufweist, welcher quer zur zweiten Führung (52) orientiert ist, wobei der zweite Schenkel (66) des zweiten Spindelschlittens (18) an die erste Führung (50) gekoppelt ist.

2. Mehrspindel-Werkzeugmaschine nach Anspruch 1, **dadurch gekennzeichnet, dass** der erste Spindelschlitten (14) und der zweite Spindelschlitten (18) mechanisch ungekoppelt sind.

3. Mehrspindel-Werkzeugmaschine nach Anspruch 1 oder 2, **dadurch gekennzeichnet, dass** der erste Spindelschlitten (14) eine größere Kontaktfläche mit der ersten Führung (50) als mit der zweiten Führung (52) aufweist.

4. Mehrspindel-Werkzeugmaschine nach Anspruch 3, **dadurch gekennzeichnet, dass** der erste Spindelschlitten (14) eine größere Anzahl von Führungsschuhen (56a, 56b; 60) für die erste Führung (50) aufweist als für die zweite Führung (52).

5. Mehrspindel-Werkzeugmaschine nach einem der vorangehenden Ansprüche, **dadurch gekennzeichnet, dass** der zweite Spindelschlitten (18) eine größere Kontaktfläche mit der zweiten Führung (52) als mit der ersten Führung (50) aufweist.

6. Mehrspindel-Werkzeugmaschine nach Anspruch 5, **dadurch gekennzeichnet, dass** der zweite Spindelschlitten (18) eine größere Anzahl von Führungsschuhen (64a, 64b; 68) für die zweite Führung (52) aufweist als für die erste Führung (50).

7. Mehrspindel-Werkzeugmaschine nach einem der vorangehenden Ansprüche, **dadurch gekennzeichnet, dass** der erste Spindelschlitten (14) mindestens in Nähe der Führungen (50, 52) eine L-förmige oder dreieckförmige Gestalt hat.

8. Mehrspindel-Werkzeugmaschine nach einem der vorangehenden Ansprüche, **dadurch gekennzeichnet, dass** die erste Werkstückspindel (16) zwischen und/oder an den beiden Schenkeln (54, 58) sitzt.

9. Mehrspindel-Werkzeugmaschine nach einem der vorangehenden Ansprüche, **dadurch gekennzeichnet, dass** der zweite Spindelschlitten (18) mindestens in der Nähe der Führungen (50, 52) eine L-förmige oder dreieckförmige Gestalt hat.

10. Mehrspindel-Werkzeugmaschine nach einem der vorangehenden Ansprüche, **dadurch gekennzeichnet, dass** die zweite Werkstückspindel (20) zwischen und/oder an dem ersten Schenkel (62) und dem zweiten Schenkel (66) sitzt.

11. Mehrspindel-Werkzeugmaschine nach einem der vorangehenden Ansprüche, **dadurch gekennzeichnet, dass** die zweiten Schenkel (58; 66) des ersten Spindelschlittens (14) und des zweiten Spindelschlittens (18) parallel zueinander sind.

12. Mehrspindel-Werkzeugmaschine nach einem der vorangehenden Ansprüche, **dadurch gekennzeichnet, dass** die beiden Führungen (50, 52) parallel zueinander sind.

13. Mehrspindel-Werkzeugmaschine nach einem der vorangehenden Ansprüche, **dadurch gekennzeichnet, dass** die Führungen Führungsschienen (50; 52) umfassen.

14. Mehrspindel-Werkzeugmaschine nach einem der vorangehenden Ansprüche, **dadurch gekennzeichnet, dass** die erste Werkstückspindel (16) und die zweite Werkstückspindel (20) in einer Verschiebungsrichtung (Z) jeweils linearverschieblich an dem zugeordneten Spindelschlitten (14; 18) gehalten sind.

15. Mehrspindel-Werkzeugmaschine nach Anspruch 14, **dadurch gekennzeichnet, dass** die Verschiebungsrichtung (Z) einer Werkstückspindel (16; 20) quer zu einer Verschiebungsrichtung (X) des zugeordneten Spindelschlittens (14; 18) ist.

16. Mehrspindel-Werkzeugmaschine nach einem der vorangehenden Ansprüche, **dadurch gekennzeichnet, dass** die erste Führung (50) und zweite Führung (52) horizontal ausgerichtet am Maschinengestell (12) angeordnet sind.

17. Mehrspindel-Werkzeugmaschine nach einem der vorangehenden Ansprüche, **dadurch gekennzeichnet, dass** die Werkstückspindeln (16; 20) vertikal an dem zugeordneten Spindelschlitten (14; 18) geführt sind.

18. Mehrspindel-Werkzeugmaschine nach einem der vorangehenden Ansprüche, **dadurch gekennzeichnet, dass** die Werkzeugaufnahmevorrichtung (38) eine erste Werkzeugaufnahme (42) und eine zweite Werkzeugaufnahme (44) aufweist.

19. Mehrspindel-Werkzeugmaschine nach Anspruch 18, **dadurch gekennzeichnet, dass** die beiden Werkzeugaufnahmen (42, 44) zwischen den beiden Führungen (50, 52) angeordnet sind.

20. Mehrspindel-Werkzeugmaschine nach Anspruch 18 oder 19, **dadurch gekennzeichnet, dass** die beiden Werkzeugaufnahmen (42, 44) an einer Schwinge (46) angeordnet sind.

21. Mehrspindel-Werkzeugmaschine nach einem der vorangehenden Ansprüche, **dadurch gekennzeichnet, dass** die Werkzeugaufnahmevorrichtung (38) schwenkbar an dem Maschinengestell (12) angeordnet ist.

22. Mehrspindel-Werkzeugmaschine nach einem der vorangehenden Ansprüche, **dadurch gekennzeichnet, dass** die beiden Spindelschlitten (14; 18) synchron oder unabhängig voneinander gesteuert beweglich sind.

23. Mehrspindel-Werkzeugmaschine nach einem der vorangehenden Ansprüche, **dadurch gekennzeichnet, dass** die beiden Werkstückspindeln (16; 20) synchron oder unabhängig voneinander gesteuert beweglich sind.

24. Mehrspindel-Werkzeugmaschine nach einem der vorangehenden Ansprüche, **dadurch gekennzeichnet, dass** ein Werkstück an einer Werkstückspindel (16; 20) zur Drehbearbeitung rotierbar gehalten ist.

25. Mehrspindel-Werkzeugmaschine nach einem der vorangehenden Ansprüche, **dadurch gekennzeichnet, dass** eine Stützführung (120) für den ersten Spindelschlitten (102) und/oder zweiten Spindelschlitten vorgesehen ist.

26. Mehrspindel-Werkzeugmaschine nach Anspruch 25, **dadurch gekennzeichnet, dass** die Stützführung (120) so angeordnet und ausgebildet ist, dass durch einen Linearmotor (140) ausgeübte Kräfte aufnehmbar sind.

27. Mehrspindel-Werkzeugmaschine nach Anspruch 26, **dadurch gekennzeichnet, dass** durch die Stützführung (120) horizontale und vertikale Kräfte aufnehmbar sind.

28. Mehrspindel-Werkzeugmaschine nach einem der Ansprüche 25 bis 27, **dadurch gekennzeichnet, dass** die Stützführung (120) oberhalb der ersten Führung (50) und zweiten Führung (52) für die Spindelschlitten (102) angeordnet ist.

29. Mehrspindel-Werkzeugmaschine nach einem der Ansprüche 25 bis 28, **dadurch gekennzeichnet, dass** die Stützführung (120) eine erste Führungseinrichtung (122) umfasst, welche mit einer Erstreckung in der Verschiebungsrichtung an dem zugeordneten Spindelschlitten (102) angeordnet ist, und eine zweite korrespondierende Führungseinrichtung (124) umfasst, welche am Maschinengestell (12) angeordnet ist.

30. Mehrspindel-Werkzeugmaschine nach einem der Ansprüche 25 bis 29, **dadurch gekennzeichnet, dass** zwischen der Stützführung (120) und der ersten Führung (50) ein Linearmotor (140) für den zugeordneten Spindelschlitten (102) sitzt.

31. Mehrspindel-Werkzeugmaschine nach einem der Ansprüche 25 bis 30, **dadurch gekennzeichnet, dass** zwischen der Stützführung (120) und der zweiten Führung (52) ein Linearmotor für den zugeordneten Spindelschlitten sitzt.

32. Mehrspindel-Werkzeugmaschine nach einem der Ansprüche 29 bis 31, **dadurch gekennzeichnet, dass** die erste Führungseinrichtung (122) an einer Seitenwand (116) des zugeordneten Spindelschlittens (102) sitzt.

## Claims

1. Multiple spindle machine tool, comprising a machine frame (12), a first spindle slide (14) with a first workpiece spindle (16) and a second spindle slide (18) with a second workpiece spindle (20), wherein first spindle slide (14) and second spindle slide (18) are guided on the machine frame (12) for linear displacement, a first guide (50) and a spaced second guide (52) arranged on the machine frame (12), wherein the first workpiece spindle (16) and the second workpiece spindle (20) are arranged between the two guides (50, 52), and a tool receiving device (38),
**characterized in that** both the first spindle slide (14) and the second spindle slide are guided on the first guide (50) and the second guide (52), that the first spindle slide (14) has a first arm (54) orientated along the first guide (50) and a second arm (58) oriented transversely to the first guide (50), wherein the second arm (58) of the first spindle slide (14) is coupled to the second guide (52), and that the second spindle slide (18) has a first arm (62) oriented along the second guide (52) and a second arm (66) oriented transversely to the second guide (52), wherein the second arm (66) of the second spindle slide (18) is coupled to the first guide (50).

2. Multiple spindle machine tool as defined in claim 1, **characterized in that** the first spindle slide (14) and the second spindle slide (18) are not coupled mechanically.

3. Multiple spindle machine tool as defined in claim 1 or 2, **characterized in that** the first spindle slide (14) has a greater contact surface area with the first guide (50) than with the second guide (52).

4. Multiple spindle machine tool as defined in claim 3, **characterized in that** the first spindle slide (14) has a greater number of guide shoes (56a, 56b; 60) for the first guide (50) than for the second guide (52).

5. Multiple spindle machine tool as defined in any one of the preceding claims, **characterized in that** the second spindle slide (18) has a greater contact surface area with the second guide (52) than with the first guide (50).

6. Multiple spindle machine tool as defined in claim 5, **characterized in that** the second spindle slide (18) has a greater number of guide shoes (64a, 64b; 68) for the second guide (52) than for the first guide (50).

7. Multiple spindle machine tool as defined in any one of the preceding claims, **characterized in that** the first spindle slide (14) has an L-shaped or triangular configuration at least in the vicinity of the guides (50, 52).

8. Multiple spindle machine tool as defined in any one of the preceding claims, **characterized in that** the first workpiece spindle (16) is seated between and/or on the two arms (54, 58).

9. Multiple spindle machine tool as defined in any one of the preceding claims, **characterized in that** the second spindle slide (18) has an L-shaped or triangular configuration at least in the vicinity of the guides (50, 52).

10. Multiple spindle machine tool as defined in any one of the preceding claims, **characterized in that** the second workpiece spindle (20) is seated between and/or on the first arm (62) and the second arm (66).

11. Multiple spindle machine tool as defined in any one of the preceding claims, **characterized in that** the second arms (58; 66) of the first spindle slide (14) and the second spindle slide (18) are parallel to one another.

12. Multiple spindle machine tool as defined in any one of the preceding claims, **characterized in that** the two guides (50, 52) are parallel to one another.

13. Multiple spindle machine tool as defined in any one of the preceding claims, **characterized in that** the guides comprise guide rails (50; 52).

14. Multiple spindle machine tool as defined in any one of the preceding claims, **characterized in that** the first workpiece spindle (16) and the second workpiece spindle (20) are supported on the associated spindle slide (14; 18) for respective linear displacement in a direction of displacement (Z).

15. Multiple spindle machine tool as defined in claim 14, **characterized in that** the direction of displacement (Z) of a workpiece spindle (16; 20) is transverse to a direction of displacement (X) of the associated spindle slide (14; 18).

16. Multiple spindle machine tool as defined in any one of the preceding claims, **characterized in that** the first guide (50) and second guide (52) are arranged on the machine frame (12) so as to be aligned horizontally.

17. Multiple spindle machine tool as defined in any one of the preceding claims, **characterized in that** the workpiece spindles (16; 20) are guided vertically on the associated spindle slide (14; 18).

18. Multiple spindle machine tool as defined in any one of the preceding claims, **characterized in that** the tool receiving device (38) has a first tool receiving means (42) and a second tool receiving means (44).

19. Multiple spindle machine tool as defined in claim 18, **characterized in that** the two tool receiving means (42, 44) are arranged between the two guides (50, 52).

20. Multiple spindle machine tool as defined in claim 18 or 19, **characterized in that** the two tool receiving means (42, 44) are arranged on a rocker arm (46).

21. Multiple spindle machine tool as defined in any one of the preceding claims, **characterized in that** the tool receiving device (38) is arranged on the machine frame (12) so as to be pivotable.

22. Multiple spindle machine tool as defined in any one of the preceding claims, **characterized in that** the two spindle slides (14; 18) are movable synchronously or independently of one another in a controlled manner.

23. Multiple spindle machine tool as defined in any one of the preceding claims, **characterized in that** the two workpiece spindles (16; 20) are movable synchronously or independently of one another in a controlled manner.

24. Multiple spindle machine tool as defined in any one of the preceding claims, **characterized in that** a workpiece is held on a workpiece spindle (16; 20) so as to be rotatable for rotary machining.

25. Multiple spindle machine tool as defined in any one of the preceding claims, **characterized in that** a supporting guide (120) is provided for the first spindle slide (102) and/or second spindle slide.

26. Multiple spindle machine tool as defined in claim 25, **characterized in that** the supporting guide (120) is arranged and designed such that forces exerted by a linear motor (140) are absorbable.

27. Multiple spindle machine tool as defined in claim 26, **characterized in that** horizontal and vertical forces are absorbable by the supporting guide (120).

28. Multiple spindle machine tool as defined in any one of claims 25 to 27, **characterized in that** the supporting guide (120) is arranged above the first guide (50) and second guide (52) for the spindle slides (102).

29. Multiple spindle machine tool as defined in any one of claims 25 to 28, **characterized in that** the supporting guide (120) comprises a first guiding device (122) arranged on the associated spindle slide (102) with an extension in the direction of displacement and comprises a second corresponding guiding device (124) arranged on the machine frame (12).

30. Multiple spindle machine tool as defined in any one of claims 25 to 29, **characterized in that** a linear motor (140) for the associated spindle slide (102) is seated between the supporting guide (120) and the first guide (50).

31. Multiple spindle machine tool as defined in any one of claims 25 to 30, **characterized in that** a linear motor for the associated spindle slide is seated between the supporting guide (120) and the second guide (52).

32. Multiple spindle machine tool as defined in any one of claims 29 to 31, **characterized in that** the first guiding device (122) is seated on a side wall (116) of the associated spindle slide (102).

## Revendications

1. Machine-outil multibroche comprenant un bâti de machine (12), un premier chariot porte-broche (14) comportant une première broche porte-pièce (16), et un deuxième chariot porte-broche (18) comportant une deuxième broche porte-pièce (20), où le premier chariot porte-broche (14) et le deuxième chariot porte-broche (18) sont guidés en étant mobiles de façon linéaire sur le bâti de machine (12), comprenant un premier guidage (50) et un deuxième guidage (52) espacés, qui sont disposés sur le bâti de machine (12), où la première broche porte-pièce (16) et la deuxième broche porte-pièce (20) sont disposées entre les deux guidages (50, 52), et comprenant un dispositif de fixation d'outil (38), **caractérisée en ce que** aussi bien le premier chariot porte-broche (14) que le deuxième chariot porte-broche sont guidés sur le premier guidage (50) et sur le deuxième guidage (52), **en ce que** le premier chariot porte-broche (14) présente une première branche (54) qui est orientée le long du premier guidage (50), et présente une deuxième branche (58) qui est orientée de façon transversale par rapport au premier guidage (50), où la deuxième branche (58) du premier chariot porte-broche (14) est couplée au deuxième guidage (52), et **en ce que** le deuxième chariot porte-broche (18) présente une première branche (62) qui est orientée le long du deuxième guidage (52), et présente une deuxième branche (66) qui est orientée de façon transversale par rapport au deuxième guidage (52), où la deuxième branche (66) du deuxième chariot porte-broche (18) est couplée au premier guidage (50).

2. Machine-outil multibroche selon la revendication 1, **caractérisée en ce que** le premier chariot porte-broche (14) et le deuxième chariot porte-broche (18) sont mécaniquement non accouplés.

3. Machine-outil multibroche selon la revendication 1 ou 2, **caractérisée en ce que** le premier chariot porte-broche (14) présente une surface de contact avec le premier guidage (50), plus grande que celle avec le deuxième guidage (52).

4. Machine-outil multibroche selon la revendication 3, **caractérisée en ce que** le premier chariot porte-broche (14) présente un plus grand nombre de patins de guidage (56a, 56b ; 60) pour le premier guidage (50) que pour le deuxième guidage (52).

5. Machine-outil multibroche selon l'une quelconque des revendications précédentes, **caractérisée en ce que** le deuxième chariot porte-broche (18) présente une surface de contact avec le deuxième guidage (52), plus grande que celle avec le premier guidage (50).

6. Machine-outil multibroche selon la revendication 5, **caractérisée en ce que** le deuxième chariot porte-broche (18) présente un plus grand nombre de patins de guidage (64a, 64b ; 68) pour le deuxième guidage (52) que pour le premier guidage (50).

7. Machine-outil multibroche selon l'une quelconque des revendications précédentes, **caractérisée en ce que** le premier chariot porte-broche (14), au moins à proximité des guidages (50, 52), est en forme de L ou en forme de triangle.

8. Machine-outil multibroche selon l'une quelconque des revendications précédentes, **caractérisée en ce que** la première broche porte-pièce (16) est placée entre et/ou sur les deux branches (54, 58).

9. Machine-outil multibroche selon l'une quelconque des revendications précédentes, **caractérisée en ce que** le deuxième chariot porte-broche (18), au moins à proximité des guidages (50, 52), est en forme de L ou une forme de triangle.

10. Machine-outil multibroche selon l'une quelconque des revendications précédentes, **caractérisée en ce que** la deuxième broche porte-pièce (20) est placée entre et/ou sur la première branche (62) et sur la deuxième branche (66).

11. Machine-outil multibroche selon l'une quelconque des revendications précédentes, **caractérisée en ce que** les deuxièmes branches (58 ; 66) du premier chariot porte-broche (14) et du deuxième chariot porte-broche (18) sont parallèles entre elles.

12. Machine-outil multibroche selon l'une quelconque des revendications précédentes, **caractérisée en ce que** les deux guidages (50, 52) sont parallèles entre eux.

13. Machine-outil multibroche selon l'une quelconque des revendications précédentes, **caractérisée en ce que** les guidages comprennent des rails de guidage (50, 52).

14. Machine-outil multibroche selon l'une quelconque des revendications précédentes, **caractérisée en ce que** la première broche porte-pièce (16) et la deuxième broche porte-pièce (20) sont tenues sur le chariot porte-broche associé (14 ; 18), en étant respectivement mobiles de façon linéaire dans une direction de déplacement (Z).

15. Machine-outil multibroche selon la revendication 14, **caractérisée en ce que** la direction de déplacement (Z) d'une broche porte-pièce (16 ; 20) est orientée transversalement par rapport à une direction de déplacement (X) du chariot porte-broche associé (14 ; 18).

16. Machine-outil multibroche selon l'une quelconque des revendications précédentes, **caractérisée en ce que** le premier guidage (50) et le deuxième guidage (52) sont disposés sur le bâti (12) de la machine, en étant orientés horizontalement.

17. Machine-outil multibroche selon l'une quelconque des revendications précédentes, **caractérisée en ce que** les broches porte-pièces (16 ; 20) sont guidées verticalement sur le chariot porte-broche associé (14 ; 18).

18. Machine-outil multibroche selon l'une quelconque des revendications précédentes, **caractérisée en ce que** le dispositif de fixation d'outil (38) présente une première fixation d'outil (42) et une deuxième fixation d'outil (44).

19. Machine-outil multibroche selon la revendication 18, **caractérisée en ce que** les deux fixations d'outils (42, 44) sont disposées entre les deux guidages (50, 52).

20. Machine-outil multibroche selon la revendication 18 ou 19, **caractérisée en ce que** les deux fixations d'outils (42, 44) sont disposées sur une coulisse (46).

21. Machine-outil multibroche selon l'une quelconque des revendications précédentes, **caractérisée en ce que** le dispositif de fixation d'outil (38) est disposé de façon pivotante sur le bâti (12) de la machine.

22. Machine-outil multibroche selon l'une quelconque des revendications précédentes, **caractérisée en ce que** les deux chariots porte-broches (14 ; 18) sont commandés en étant mobiles, de façon synchronisée l'un par rapport à l'autre ou bien de façon indépendante l'un de l'autre.

23. Machine-outil multibroche selon l'une quelconque des revendications précédentes, **caractérisée en ce que** les deux broches porte-pièces (16 ; 20) sont commandées en étant mobiles, de façon synchronisée l'une par rapport à l'autre ou bien de façon indépendante l'une de l'autre.

24. Machine-outil multibroche selon l'une quelconque des revendications précédentes, **caractérisée en ce qu'**une pièce à usiner est tenue, en rotation, sur une broche porte-pièce (16 ; 20) pour l'usinage par tournage.

25. Machine-outil multibroche selon l'une quelconque des revendications précédentes, **caractérisée en ce qu'**il est prévu un guidage d'appui (120) pour le premier chariot porte-broche (102) et/ou pour le deuxième chariot porte-broche.

26. Machine-outil multibroche selon la revendication 25, **caractérisée en ce que** le guidage d'appui (120) est disposé et configuré de manière telle, que des forces exercées par un moteur linéaire (140) puissent être absorbées.

27. Machine-outil multibroche selon la revendication 26, **caractérisée en ce que** des forces horizontales et verticales peuvent être absorbées par le guidage d'appui (120).

28. Machine-outil multibroche selon l'une quelconque des revendications 25 à 27, **caractérisée en ce que** le guidage d'appui (120) est disposé au-dessus du premier guidage (50) et du deuxième guidage (52) prévus pour les chariots porte-broches (102).

29. Machine-outil multibroche selon l'une quelconque des revendications 25 à 28, **caractérisée en ce que** le guidage d'appui (120) comprend un premier dispositif de guidage (122) qui, en s'étendant dans la direction de déplacement, est disposé sur le chariot porte-broche associé (102), et comprend un deuxième dispositif de guidage correspondant (124) qui est disposé sur le bâti (12) de la machine.

30. Machine-outil multibroche selon l'une quelconque des revendications 25 à 29, **caractérisée en ce qu'**un moteur linéaire (140), prévu pour le chariot porte-broche associé (102), est placé entre le guidage d'appui (120) et le premier guidage (50).

31. Machine-outil multibroche selon l'une quelconque des revendications 25 à 30, **caractérisée en ce qu'**un moteur linéaire prévu pour le chariot porte-broche associé est placé entre le guidage d'appui (120) et le deuxième guidage (52).

32. Machine-outil multibroche selon l'une quelconque des revendications 29 à 31, **caractérisée en ce que** le premier dispositif de guidage (122) est placé sur une paroi latérale (116) du chariot porte-broche associé (102).
